# EUROPEAN PATENT APPLICATION

(11) **EP 4 383 788 A1**
(43) Date of publication of application: **12.06.2024**
(21) Application number: 21952153.1
(22) Date of filing: 02.08.2021
(51) Int. Cl.: H04W 24/00, H04W 72/00, H04B 7/00

(54) **CELL MEASUREMENT METHOD AND APPARATUS, DEVICES, AND MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2021/110061
(87) International publication number: WO 2023/010243

(57) **Abstract**

The present invention relates to the field of communications, and disclosed are a cell measurement method and apparatus, devices, and a medium. The method comprises: a terminal receives configuration information, the configuration information being used for indicating a dynamic adjustment rule of a time parameter when the terminal performs cell measurement; and determining a measurement window on the basis of the dynamic adjustment rule. By configuring the dynamic adjustment rule of the time parameter of the measurement window by means of the configuration information, a UE can obtain time parameter information of a subsequent SMTC/measurement Gap, such as the value of offset/duration, according to the configuration information, and thus the updating frequency of the SMTC/measurement Gap is effectively reduced.

## Description

### TECHNICAL FIELD

The present disclosure relates to the field of communication, and more particularly, to a cell measurement method, apparatus, device and medium.

### BACKGROUND

In the 5G new radio (NR), non-terrestrial networks (NTNs), i.e., 5G satellite communication networks, are introduced. As satellites are high above the earth, a transmission delay of the NTN networks is relatively large.

In an NTN system, due to a large cell radius, an overlapping range of coverage areas of different satellites are also large. When satellite 1 provides services to a user equipment (UE), the UE may also be located in the coverage areas of satellite 2/satellite 3. Considering the mobility of the UE, the UE needs to perform a measurement on neighboring cells covered by the satellite 2/the satellite 3, and the impact of a transmission delay difference needs to be considered.

### SUMMARY

Embodiments of the present disclosure provide a cell measurement method, apparatus, device, and medium. The technical solutions are as follows.

According to a first aspect of the present disclosure, a cell measurement method is provided, which is performed by a terminal and includes: receiving configuration information, in which the configuration information is configured to indicate a dynamic adjustment rule of a time parameter when the terminal performs a cell measurement; and determining a measurement window based on the dynamic adjustment rule.

In another aspect, a cell measurement method is provided, which is performed by a network device and includes: sending configuration information to a terminal according to location information of the terminal and ephemeris information of a satellite. The configuration information is configured to indicate a dynamic adjustment rule of a time parameter when the terminal performs a cell measurement.

In another aspect, a cell measurement apparatus is provided, which includes: a receiving module configured to receive configuration information, in which the configuration information is configured to indicate a dynamic adjustment rule of a time parameter when a terminal performs a cell measurement; and a processing module configured to determine a measurement window based on the dynamic adjustment rule.

In another aspect, a cell measurement apparatus is provided, which includes: a sending module configured to send configuration information to a terminal according to location information of the terminal and ephemeris information of a satellite. The configuration information is configured to indicate a dynamic adjustment rule of a time parameter when the terminal performs a cell measurement.

In another aspect, a terminal is provided, which includes: a processor; a transceiver connected to the processor; and a memory having stored therein executable instructions of the processor. The processor is configured to load and execute the executable instructions to implement the cell measurement method according to any one of the above embodiments.

In another aspect, a network device is provided, which includes: a processor; a transceiver connected to the processor; and a memory having stored therein executable instructions of the processor. The processor is configured to load and execute the executable instructions to implement the cell measurement method according to any one of the above embodiments.

In another aspect, a computer-readable storage medium is provided, which has stored therein executable instructions that, when loaded and executed by a processor, cause the cell measurement method according to any one of the above embodiments to be implemented.

The technical solutions provided in embodiments of the present disclosure at least include the following advantageous effects.

The dynamic adjustment rule of the time parameter of the measurement window is configured through the configuration information. A UE may obtain time parameter information, such as values of an offset/a duration, etc., of the subsequent synchronization signal block measurement timing configuration (SMTC)/measurement gap according to the configuration information, effectively reducing an update frequency of the SMTC/the measurement gap.

### BRIEF DESCRIPTION OF THE DRAWINGS

In order to clearly illustrate the technical solutions in embodiments of the present disclosure, the accompanying drawings to be used in the description of embodiments will be briefly introduced below. Apparently, the drawings in the following description only show some embodiments of the present disclosure. For those ordinarily skilled in the art, other drawings may also be obtained according to these drawings without any creative effort.
FIG. 1 is a network architecture diagram of a transparent transmission load NTN according to an illustrative embodiment of the present disclosure;
FIG. 2 is a network architecture diagram of a regeneration load NTN according to an illustrative embodiment of the present disclosure;
FIG. 3 is a schematic diagram of a satellite transmission delay according to an illustrative embodiment of the present disclosure;
FIG. 4 is a flowchart of a cell measurement method according to an illustrative embodiment of the present disclosure;
FIG. 5 is a schematic diagram of determining a measurement window based on an offset change rate according to an illustrative embodiment of the present disclosure;
FIG. 6 is a schematic diagram of determining a measurement window based on a change rate of a time window length according to an illustrative embodiment of the present disclosure;
FIG. 7 is a schematic diagram of determining a measurement window based on a period change rate according to an illustrative embodiment of the present disclosure;
FIG. 8 is a flowchart of a cell measurement method according to another illustrative embodiment of the present disclosure;
FIG. 9 is a flowchart of a cell measurement method according to another illustrative embodiment of the present disclosure;
FIG. 10 is a block diagram of a cell measurement apparatus according to an illustrative embodiment of the present disclosure;
FIG. 11 is a block diagram of a cell measurement apparatus according to another illustrative embodiment of the present disclosure; and
FIG. 12 is a schematic block diagram of a communication device according to an illustrative embodiment of the present disclosure.

### DETAILED DESCRIPTION

In order to make the purposes, technical solutions and advantages of the present disclosure clearer, embodiments of the present disclosure will be further described in detail below in conjunction with the accompanying drawings.

Currently, the third generation partnership project (3GPP) is studying the NTN technology, which generally uses a satellite communication to provide a communication service for a user on the ground. Compared with a terrestrial cellular network communication, the satellite communication has many unique advantages. First of all, the satellite communication is not restricted by the geographical area of a user. For example, the land communication general cannot cover areas where communication equipment cannot be built, such as oceans, mountains, deserts, etc., or areas where the communication coverage is not available due to the sparse population. However, for the satellite communication, as one satellite can cover a large area of the ground, and the satellite may orbit around the earth, so theoretically, every corner of the earth may be covered by the satellite communication. Secondly, the satellite communication has a great social value. The satellite communication may cover remote mountainous areas, as well as poor and underdeveloped countries or regions at a lower cost, allowing people in these areas to enjoy an advanced voice communication and a mobile Internet technology, which is conducive to narrowing a digital divide with developed regions, and promoting the development in these areas. Thirdly, the satellite communication can realize a long distance communication, and the cost of the communication does not increase significantly as the communication distance increases. Finally, the satellite communication has a high stability, and is not restricted by natural disasters.

Communication satellites are divided into low-earth orbit (LEO) satellites, medium-earth orbit (MEO) satellites, geostationary earth orbit (GEO) satellites, highly elliptical orbit (HEO) satellites, and so on, based on different orbital altitudes. At the current stage, the research focuses on the LEO and the GEO.

### LEO

An altitude range of low-orbit satellites is from 500 km to 1500 km, and a corresponding orbital period is about 1.5 hours to 2 hours. A signal propagation delay of a single-hop communication between users is generally less than 20 ms. A maximum satellite visibility time is 20 minutes. A signal propagation distance is short, a link loss is small, and a transmission power requirement for a user terminal is not high.

### GEO

The geostationary earth orbit satellites have an orbital altitude of 35,786 km and a rotation period around the earth of 24 hours. The signal propagation delay of the single-hop communication between users is generally 250 ms.

In order to ensure the coverage of a satellite and improve the system capacity of an entire satellite communication system, the satellite uses multiple beams to cover the ground. One satellite may form dozens or even hundreds of beams to cover the ground, and one satellite beam may cover a ground area of dozens to hundreds of kilometers in diameter.

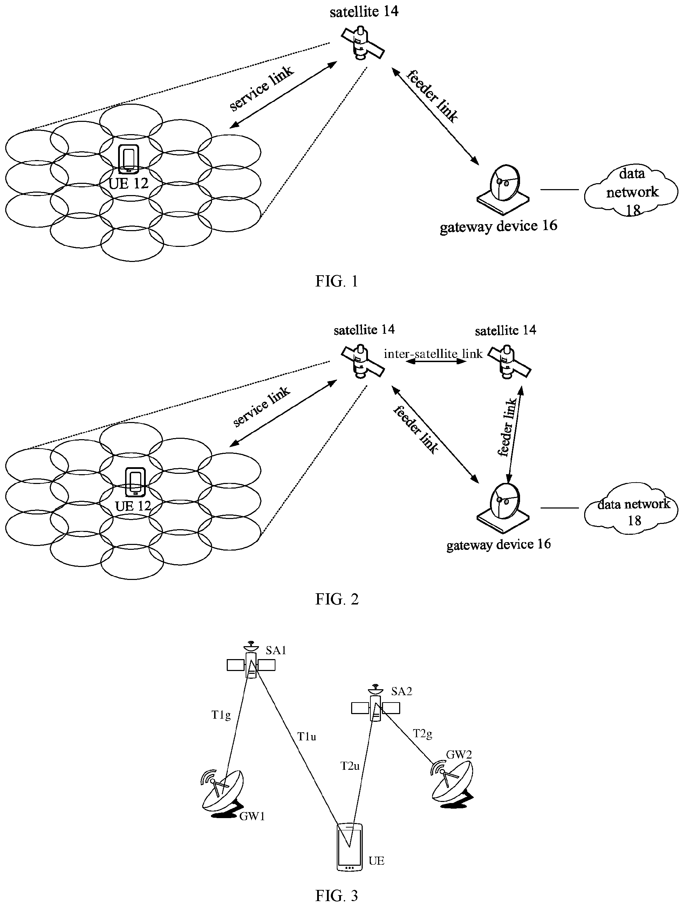

At least two NTN scenarios exist: a transparent transmission load NTN and a regeneration load NTN. FIG. 1 shows a scenario of the transparent transmission load NTN, which includes a UE 12, a satellite 14, a gateway device 16 and a data network 18. A feeder link is included between the satellite 14 and the gateway device 16.

FIG. 2 shows a scenario of the regeneration load NTN, which includes a UE 12, satellites 14, a gateway device 16 and a data network 18. Feeder links are included between the satellites 14 and the gateway device 16, and an inter-satellite link is included between the satellites 14.

An NTN network consists of the following network elements.
. One or more gateways: for connecting a satellite and a terrestrial public network.
. A feeder link: a link used for a communication between a gateway and a satellite.
. A service link: a link used for a communication between a terminal and a satellite.
. One or more satellites: which may be divided into: a transparent transmission load and a regeneration load based on functions provided thereby.
. Transparent transmission load: only provides functions of wireless frequency filtering, frequency conversion and amplification, and only provides a transparent forwarding of a signal, but does not change a waveform signal it forwards.
. Regeneration load: does not only provide the functions of the wireless frequency filtering, the frequency conversion and amplification, but also provides functions of demodulation/decoding, routing/conversion, encoding/modulation. It has some or all functions of a base station.

Inter-satellite link (ISL): exists in the scenario of the regeneration load.

In a TN system, due to a small cell radius, transmission delay between a UE and different cells varies very slightly, which is much less than a length of a synchronization signal block (SSB) measurement timing configuration (SSB-Measurement Timing Configuration, SMTC)/a measurement gap. However, in an NTN system, due to a large cell radius, an overlapping range of coverage areas of different satellites is also large. When satellite 1 provides services to a UE, the UE may also be located in a coverage area of satellite 2/satellite 3. Considering the mobility of the UE, the UE needs to perform a measurement on neighboring cells covered by the satellite 2/the satellite 3, and the impact of the transmission delay difference needs to be considered. As shown in FIG. 3, a satellite (SA1) is a satellite of a serving cell, and a satellite (SA2) is a satellite of a neighboring cell. A transmission delay for the UE to receive a signal from the serving cell may be represented as T1g (a transmission delay of a feeder link) + T1u (a transmission delay of a service link), and a transmission delay for the UE to receive a signal from neighboring cell is T2u + T2g. The transmission delay difference is T1g + T1u - (T2g + T2u).

Considering that different satellites have different distances from a certain UE and a certain ground station, there will be a big difference between the transmission delay for the UE to receive a signal from a serving cell and the transmission delay for the UE to receive a signal from a neighboring cell, that is, T1g + T1u - (T2g + T2u) will not approach 0, and may be larger than a length of the SMTC/the measurement gap.

If the configuration of the SMTC/measurement gap does not consider the difference in transmission delay, the UE may miss a measurement window of an SSB/CSI-RS, and therefore cannot perform a measurement on a configured reference signal. Considering that different satellites have different locations, and the difference in the propagation delay is also large, a traditional SMTC/Gap configuration solution is not applicable to an NTN network environment. Therefore, a network needs to consider the difference in the transmission delay between different UEs and different satellites when configuring the SMTC/the measurement gap. In an SMTC configuration, different SMTCs are configured for different frequencies, and cells measuring a same frequency use a same SMTC configuration, which is not applicable to an NTN network with a huge transmission delay difference.

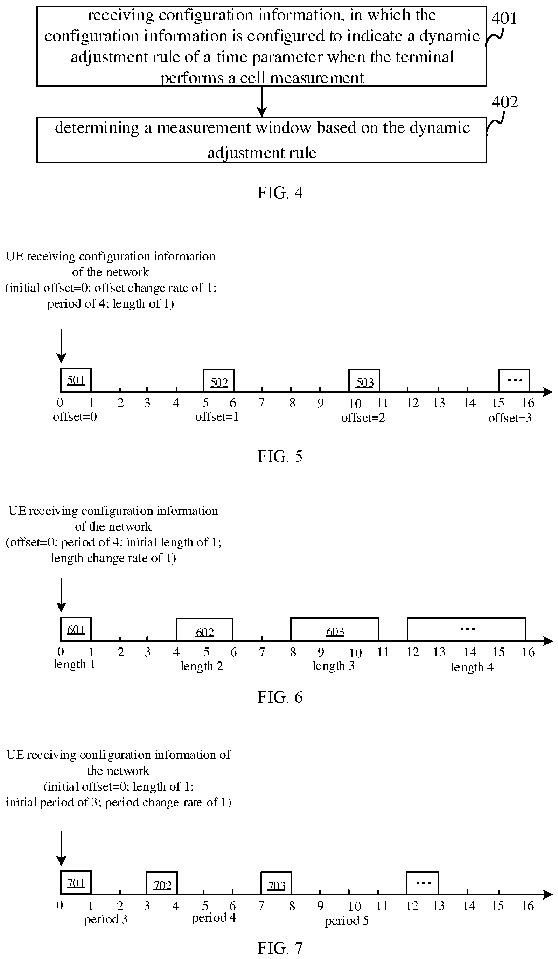

FIG. 4 shows a flowchart of a cell measurement method according to an illustrative embodiment of the present disclosure. In this embodiment, the method is described with reference to an example where the method is performed by a terminal. The method includes the following steps.

In step 401, configuration information is received. The configuration information is configured to indicate a dynamic adjustment rule of a time parameter when the terminal performs a cell measurement.

The configuration information is information for a network device to configure a measurement window to a UE according to location information of the UE and ephemeris information of a satellite. The configuration information includes a dynamic configuration rule of a time parameter of the measurement window.

The type of the satellite includes at least one of: an LEO satellite; an MEO satellite; a GEO satellite; an unmanned aircraft system platform (UAS platform) satellite; or an HEO satellite.

The measurement window includes at least one of an SMTC or a measurement gap. The time parameter includes at least one of an offset (an SMTC-offset; a measurement gap-gapoffset), a period (an SMTC-periodicity; a measurement gap-mgrp), or a duration (an SMTC-duration; a measurement gap-mgl). Optionally, when the measurement window includes the measurement gap, the time parameter also includes a measurement gap timing advance (mgta).

In some embodiments, the dynamic adjustment rule includes: at least one of a time parameter change rate or a time parameter configuration function.

The time parameter change rate is used to represent a periodic change pattern of the time parameter. The time parameter configuration function is used to represent a functional relationship between a time window serial number and the time parameter.

Optionally, the configuration information may be sent to the UE via a radio resource control (RRC) signaling. Configuration information of multiple sets of measurement windows may be included in measurement window configuration tables, and a maximum number of measurement window configurations that may be included in each measurement window configuration table may be determined by a network or may be determined according to a protocol.

In an optional embodiment, the network may provide an SMTC configuration table in a measurement configuration. For example, the measurement configuration includes an SMTC configuration table (smtc-ntn-list), in a type of SSB-MTC-ntn-List, defined as follows: an SSB-MTC-ntn is a configuration of a set of SMTCs, the smtc-ntn-list includes configurations of multiple sets of SMTCs, and a maxNrofSSBMTCntn is a maximum number of sets of configurable SMTCs.

In an optional embodiment, the network may provide a measurement gap configuration table in the measurement configuration. For example, the measurement configuration includes a measurement gap configuration table (meagap-ntn-list), in a type of MeasGap-ntn-List, defined as follows: a MeasGap-ntn is a configuration of a set of measurement gaps, the meagap-ntn-list includes configurations of multiple sets of measurement gaps, and a maxNrofMeasGapntn is a maximum number of sets of configurable measurement gaps.

In step 402, the measurement window is determined based on the dynamic adjustment rule.

In some embodiments, the measurement window is determined directly based on the dynamic adjustment rule; or the measurement window is determined based on the dynamic adjustment rule and an initial time parameter.

Methods for determining the measurement window based on the dynamic adjustment rule are introduced.

In a first method, the configuration information includes the time parameter change rate; and the measurement window is determined based on the initial time parameter and the time parameter change rate.

That is, if the network configures a change amount of the time parameter of the measurement window, the UE calculates a value of a time parameter of a current measurement window according to the change rate configured by the network and the initial time parameter.

Illustratively, description is made by taking the offset as an example, where an initial offset is 4 ms, and the change rate configured by the network is 1 ms, so starting from a moment when the UE receives measurement window configuration information, an offset of a first measurement window is 4 ms; an offset of a second measurement window is 5 ms; and an offset of a third measurement window is 6 ms.

It should be noted that the above period is only an illustrative example. In some embodiments, the time parameter change rate includes two change rate values to indicate change rates in alternative periods. Illustratively, description is made by taking the offset as an example, where the initial offset is 4 ms, and the change rates configured by the network are 1 ms and 2 ms, so starting from a moment when the UE receives the measurement window configuration information, an offset of a first measurement window is 4 ms, an offset of a second measurement window is 5 ms (4 ms + 1 ms), an offset of a third measurement window is 7 ms (5 ms + 2 ms), an offset of a fourth measurement window is 8 ms (7 ms + 1 ms), and so on.

It should be noted that the above initial time parameter is configured in the configuration information; or the initial time parameter is predefined; or the initial time parameter is preconfigured. In some embodiments, when the configuration information includes the initial time parameter, the initial time parameter configured in the configuration information is preferred. In case that the configuration information does not include the initial time parameter, a default initial time parameter is used, and the default initial time parameter is the above preconfigured or predefined initial time parameter.

In a second method, the configuration information includes the time parameter configuration function; and the measurement window is determined based on the time parameter configuration function.

The time parameter configuration function includes, but is not limited to, any one of: a first-order function; a second-order function; or other higher-order functions; or other functions of any form.

The time parameter configuration function is a function related to the time parameter of the measurement window and the measurement window serial number. The UE calculates the value of the time parameter of the current measurement window according to the time parameter configuration function delivered by the network.

Illustratively, description is made with reference to an example where the first-order function is used to determine the offset. For example, an offset change function is n + 3, with ms as the unit, then starting from a moment when the UE receives the configuration information, an offset of a first measurement window is 1 + 3 = 4 ms, an offset of a second measurement window is 2 +3 = 5 ms, and an offset of a third measurement window is 3 + 3 = 6 ms.

Illustratively, description is made with reference to an example where the second-order function is used to determine the offset. For example, the offset change function is n² + 3, with ms as the unit, then starting from a moment when the UE receives the configuration information, an offset of a first measurement window is 1 + 3 = 4 ms, an offset of a second measurement window is 4 + 3 = 7 ms, and an offset of a third measurement window is 9 + 3 = 12 ms.

In some embodiments, the measurement window serial number represents a serial number of a measurement window in which the UE may perform a measurement, starting from the moment when the UE receives the configuration information of the network.

A location of the measurement window is determined as follows.

First, a location of a first measurement window is a location of a nearest time window that satisfies a corresponding time parameter configured by the network starting from a moment when the UE receives the configuration information of the network; and a location of an n-th measurement window is a location of a nearest time window that satisfies the corresponding time parameter configured by the network starting from a moment when an (n-1)-th measurement window ends, where n ≥ 2, and n is an integer.

For example, the measurement window is determined based on the initial time parameter and the time parameter change rate.

Illustratively, as shown in FIG. 5, which shows a schematic diagram of determining a measurement window based on an offset change rate according to an illustrative embodiment of the present disclosure. As shown in FIG. 5, a UE receives configuration information of a network at a moment t0, and the configuration information indicates that an initial offset is offset = 0, an offset change rate is 1, a period is 4, and a time window length is 1, then a first time window 501 with the moment t0 as a starting moment is used as a first measurement window that satisfies the time parameter. In a second period with a period of 4, a second time window 502 with an offset of 1 is used as a second measurement window that satisfies the time parameter. Similarly and subsequently, a third time window 503 in a third period is obtained as a measurement window that satisfies the time parameter, and so on.

Illustratively, as shown in FIG. 6, which shows a schematic diagram of determining a measurement window based on a change rate of a time window length according to an illustrative embodiment of the present disclosure. As shown in FIG. 6, a UE receives configuration information of a network at a moment t0, and the configuration information indicates that an offset is offset = 0, a period is 4, an initial time window length is 1, and a time window change rate is 1, then with the moment t0 as a starting moment, a first time window 601 with a length of 1 is used as a first measurement window that satisfies the time parameter. In a second period with a period of 4, a second time window 602 with an offset of 0 and a length of 2 is used as a second measurement window that satisfies the time parameter. Similarly and subsequently, a third time window 603 with a length of 3 in a third period is obtained as a measurement window that satisfies the time parameter, and so on.

Illustratively, as shown in FIG. 7, which shows a schematic diagram of determining a measurement window based on a period change rate according to an illustrative embodiment of the present disclosure. As shown in FIG. 7, a UE receives configuration information of a network at a moment t0, and the configuration information indicates that an offset is offset = 0, an initial period is 3, a period change rate is 1, and a time window length is 1, then with the moment t0 as a starting moment, a first time window 701 with a length of 1 is used as a first measurement window that satisfies the time parameter. After a first period (3 time windows), a fourth time window 702 is used as a second measurement window that satisfies the time parameter. Similarly and subsequently, after a second period (4 the time windows), a time window 703 is obtained as a third measurement window that satisfies the time parameter, and so on.

In some embodiments, the above configuration information further includes a cell list and/or a satellite list.

The cell list is configured to indicate a cell to which the dynamic adjustment rule configured in the configuration information is applicable, and the dynamic adjustment rule is adapted to adjust a time parameter of a measurement window of the cell in the cell list.

The satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

Optionally, when measurement windows calculated from at least two sets of configuration information overlap, the network may indicate a measurement window determining manner to the UE via sharing mode indication information, or the UE may also use a default measurement window determining manner to determine the measurement window from overlapping measurement windows for a measurement. The default measurement window determining manner includes at least one of a random determining manner, a priority determining manner, or an extended measurement manner.

In summary, the cell measurement method according to embodiments of the present disclosure configures the dynamic adjustment rule of the time parameter of the measurement window through the configuration information. The UE may obtain time parameter information, such as values of the offset/the duration etc., of the subsequent SMTC/measurement gap according to the configuration information, effectively reducing an update frequency of the SMTC/the measurement gap.

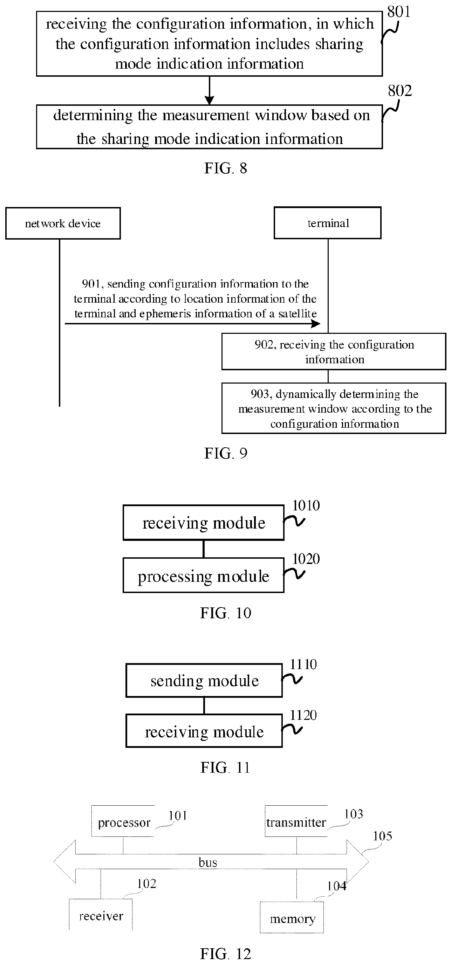

In some embodiments, the configuration information sent by the network device to the terminal device includes sharing mode indication information. FIG. 8 is a flowchart of a cell measurement method according to another illustrative embodiment of the present disclosure. The method is described with reference to an example where the method is performed by a UE. As shown in FIG. 8, the method includes the following steps.

In step 801, the configuration information is received. The configuration information includes sharing mode indication information.

The sharing mode indication information is configured to indicate a window determining manner when measurement windows calculated from at least two sets of configuration information overlap.

That is, the sharing mode indication information is configured to indicate a behavior of the UE when the measurement windows calculated according to multiple sets of measurement window configuration information overlap.

The measurement window determining manner indicated by the sharing mode indication information includes at least one of a random determining manner, a priority determining manner, or an extended measurement manner.

In step 802, the measurement window is determined based on the sharing mode indication information.
1. When the sharing mode indication information indicates the random determining manner, the measurement window is randomly determined from the measurement windows calculated from the at least two sets of configuration information to perform a measurement.

That is, when the measurement windows calculated according to multiple sets of measurement window configuration information overlap, the UE randomly relies on a measurement window to perform a corresponding measurement.

2. When the sharing mode indication information indicates the priority determining manner, a measurement window with a highest priority from the measurement windows calculated from the at least two sets of configuration information is used to perform a measurement. The measurement window with the highest priority includes a measurement window calculated according to configuration information with a highest priority.

That is, when the measurement windows calculated according to the multiple sets of measurement window configuration information overlap, the UE selects the measurement window calculated from measurement window configuration information with a highest priority to perform a corresponding measurement.

Optionally, in case that there are multiple measurement window configuration information with the highest priority, a measurement window is randomly selected from the multiple measurement window configuration information with the highest priority to perform a corresponding measurement.

Optionally, when the configuration information of the measurement window does not include priority indication information, it defaults to a highest or lowest priority.

In some embodiments, the priority of the configuration information of the measurement window may be determined according to at least one of following manners.

2.1 The priority of the measurement window configuration information may be included in the measurement window configuration information or configured separately.

That is, the configuration information includes a priority indication resource, which is configured to indicate a priority corresponding to a measurement window configured in current configuration information. Optionally, when the configuration information does not include the priority indication information, the measurement window configured in the configuration information has a highest priority or a lowest priority by default.

2.2 A priority of a cell to be measured is indicated to the UE via an RRC signaling, an MAC CE signaling or a system message broadcast.

A highest priority in an applicable cell list corresponding to the measurement window configuration information is selected as a priority of a measurement window configured in current measurement window configuration information.

Alternatively, a lowest priority in an applicable cell list corresponding to the measurement window configuration information is selected as a priority of a measurement window configured in current measurement window configuration information.

Alternatively, an average priority in an applicable cell list corresponding to the measurement window configuration information is selected as a priority of a measurement window configured in current measurement window configuration information.

2.3 A priority of a satellite to be measured is indicated to the UE via an RRC signaling, an MAC CE signaling or a system message broadcast.

A highest priority in an applicable satellite list corresponding to the measurement window configuration information is selected as a priority of a measurement window configured in current measurement window configuration information.

Alternatively, a lowest priority in an applicable satellite list corresponding to the measurement window configuration information is selected as a priority of a measurement window configured in current measurement window configuration information.

Alternatively, an average priority in an applicable satellite list corresponding to the measurement window configuration information is selected as a priority of a measurement window configured in current measurement window configuration information.

3. When the sharing mode indication information indicates the extended measurement manner, a measurement is performed using an extended measurement window based on the measurement windows calculated from the at least two sets of configuration information. The extended measurement window includes ranges of the measurement windows calculated from the at least two sets of configuration information.

That is, when the measurement windows calculated according to the multiple sets of measurement window configuration information overlap, the measurement window is expanded to a range that may include the two overlapping measurement windows, and then corresponding measurements are performed simultaneously.

In some embodiments, frequency points and/or subcarrier intervals of reference signals measured by using the measurement windows calculated from the at least two sets of configuration information are the same.

That is, in case that the frequency points and/or the subcarrier intervals of the reference signals to be measured by the overlapping measurement windows are the same, the measurement window may be expanded to the range that can include the two overlapping measurement windows, and then corresponding measurements are performed simultaneously.

In an embodiment, when the measurement windows calculated according to the multiple sets of measurement window configuration information overlap, other manners in sharing mode configuration are selected in case that the frequency points or the subcarrier intervals of the reference signals to be measured by the overlapping measurement windows are different.

It should be noted that embodiments shown in FIG. 8 may be combined with embodiments shown in FIG. 4 to form an overall embodiment. That is, the configuration information provided in FIG. 4 and the configuration information provided in FIG. 8 are included in a same piece of configuration information, or may also be implemented as independent embodiments, that is, the configuration information provided in FIG. 4 and the configuration information provided in FIG. 8 are different pieces of configuration information, which is not limited in the present disclosure.

In summary, the method according to embodiments of the present disclosure stipulates a processing solution when the SMTC/the measurement gap sends the overlapping measurement windows. According to the selected solution, the UE may efficiently determine a cell that needs to be measured; or preferentially measure a cell that needs to be measured more.

In some embodiments, the cell measurement method according to embodiments of the present disclosure is described in conjunction with an implementation environment of the above network device and terminal device. FIG. 9 is a flowchart of a cell measurement method according to another illustrative embodiment of the present disclosure. The method is applied to a communication system as an example, as shown in FIG. 9, the method includes the following steps.

In step 901, a network device sends configuration information to a terminal according to location information of the terminal and ephemeris information of a satellite.

The location information of the terminal includes precise location information of the terminal or rough location information of the terminal. The ephemeris information of the satellite includes ephemeris information of a serving satellite and ephemeris information of a neighboring satellite to be measured. The precise location information refers to relatively precise location information reported by the terminal, such as distance information and direction information relative to the network device. The rough location information refers to relatively rough location information reported by the terminal, such as: a cell where the terminal is located.

In an embodiment, when a UE reports the relatively rough location information, the network needs to configure a measurement window that is applicable to the UE within a range of the rough location information.

In an embodiment, considering the inaccuracy of the location information of the UE and the movement of the UE, the network may appropriately expand a duration of the measurement window when configuring it.

In an embodiment, when the network detects that a location of the UE has changed, and an original measurement window configuration is not applicable to a current location of the UE, the network may update the configuration information of the measurement window of the UE. Alternatively, the network may periodically update the configuration information of the measurement window. Alternatively, the network may specify a validity time of the configuration information of the measurement window, and update the configuration information of the measurement window when it is detected that the measurement window configuration is invalid.

Optionally, the configuration information is configured to indicate a dynamic adjustment rule of a time parameter; and/or the configuration information includes sharing mode indication information.

In some embodiments, the configuration information is configured to indicate the dynamic adjustment rule of the time parameter when the terminal performs a cell measurement.

The configuration information includes at least one of a time parameter change rate or a time parameter configuration function as the dynamic adjustment rule.

The time parameter change rate is used to determine the measurement window in conjunction with an initial time parameter. The time parameter configuration function is used to determine the time parameter of the measurement window according to a measurement window serial number and a functional relationship.

The time parameter configuration function includes, but is not limited to, at least one of a first-order function or a second-order function.

The initial time parameter is configured in the configuration information; or the initial time parameter is predefined; or the initial time parameter is preconfigured.

The measurement window includes at least one of a synchronization signal block measurement timing configuration (SSB-MTC) or a measurement gap.

The time parameter includes at least one of an offset, a period or a duration. Optionally, the time parameter further includes a measurement gap timing advance when the measurement window includes the measurement Gap.

In some embodiments, the above configuration information further includes a cell list and/or a satellite list.

The cell list is configured to indicate a cell to which the dynamic adjustment rule configured in the configuration information is applicable, and the dynamic adjustment rule is adapted to adjust a time parameter of a measurement window of the cell in the cell list.

The satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

Optionally, the configuration information further includes sharing mode indication information. The sharing mode indication information is configured to indicate a window determining manner when measurement windows calculated from at least two sets of configuration information overlap. That is, when the measurement windows calculated from at least two sets of configuration information overlap, the network may indicate the measurement window determining manner to the UE via the sharing mode indication information.

Alternatively, the UE may also use a default measurement window determining manner to determine the measurement window from overlapping measurement windows for a measurement. The default measurement window determining manner includes at least one of a random determining manner, a priority determining manner, or an extended measurement manner.

For example, when the configuration information does not include the sharing mode indication information, the UE uses the default measurement window determining manner to determine the measurement window from the overlapping measurement windows for the measurement.

In some embodiments, a data transmission with the terminal is performed on an unselected measurement window from the measurement windows calculated from the at least two sets of configuration information based on the window determining manner.

Optionally, in the case that the measurement windows calculated from the at least two sets of configuration information overlap, the UE reports to the network device the measurement window selected by the UE, so that the network device performs the data transmission with the terminal on the unselected measurement window. Alternatively, if the measurement window that is selectable by the UE according to the configuration is unique, the network device may also determine the measurement window selected by the UE according to configuration information issued, and perform the data transmission with the terminal on the unselected measurement window from the measurement windows calculated from the at least two sets of configuration information.

In step 902, the terminal receives the configuration information.

The configuration information is information for the network device to configure the measurement window to the UE according to the location information of the UE and the ephemeris information of the satellite. The configuration information includes a dynamic configuration rule of a time parameter of the measurement window.

The type of the satellite includes at least one of: an LEO satellite; an MEO satellite; a GEO satellite; an unmanned aircraft system platform (UAS platform) satellite; or an HEO satellite.

The measurement window includes at least one of an SMTC or a measurement gap.

In some embodiments, the dynamic adjustment rule includes: at least one of a time parameter change rate or a time parameter configuration function.

The time parameter change rate is used to represent a periodic change pattern of the time parameter. The time parameter configuration function is used to represent a functional relationship between a time window serial number and the time parameter.

Optionally, the configuration information may be sent to the UE via a radio resource control (RRC) signaling.

Optionally, the configuration information includes sharing mode indication information.

The sharing mode indication information is configured to indicate a window determining manner when measurement windows calculated from at least two sets of configuration information overlap.

That is, the sharing mode indication information is used to indicate a behavior of the UE when the measurement windows calculated according to multiple sets of measurement window configuration information overlap.

The measurement window determining manner indicated by the sharing mode indication information includes at least one of a random determining manner, a priority determining manner, or an extended measurement manner.

In step 903, the terminal dynamically determines the measurement window according to the configuration information.

In some embodiments, the measurement window is determined directly based on the dynamic adjustment rule; or the measurement window is determined based on the dynamic adjustment rule and the initial time parameter.

When the configuration information includes the sharing mode indication information, and the measurement windows calculated by the at least two sets of configuration information overlap, the measurement window is determined according to the sharing mode indication information to perform the measurement.

In summary, the method according to embodiments of the present disclosure configures the dynamic adjustment rule of the time parameter of the measurement window through the configuration information. The UE may obtain time parameter information, such as values of the offset/the duration etc., of the subsequent SMTC/measurement gap according to the configuration information, effectively reducing an update frequency of the SMTC/the measurement gap. A processing solution is stipulated when the SMTC/the measurement gap sends the overlapping measurement windows. According to the selected solution, the UE may efficiently determine a cell that needs to be measured; or preferentially measure a cell that needs to be measured more.

FIG. 10 is a structural block diagram of a cell measurement apparatus according to an illustrative embodiment of the present disclosure. As shown in FIG. 10, the apparatus includes: a receiving module 1010 and a processing module 1020.

The receiving module 1010 is configured to receive configuration information. The configuration information is configured to indicate a dynamic adjustment rule of a time parameter when a terminal performs a cell measurement.

The processing module 1020 configured to determine a measurement window based on the dynamic adjustment rule.

In an optional embodiment, the processing module 1020 is configured to determine the measurement window based on the dynamic adjustment rule and an initial time parameter.

In an optional embodiment, the configuration information includes a time parameter change rate; and the processing module 1020 is configured to determine the measurement window based on the initial time parameter and the time parameter change rate.

In an optional embodiment, the configuration information includes a time parameter configuration function; and the processing module 1020 is configured to determine the measurement window based on the time parameter configuration function.

In an optional embodiment, the time parameter configuration function includes, but is not limited to, at least one of a first-order function or a second-order function.

In an optional embodiment, the initial time parameter is configured in the configuration information; or the initial time parameter is predefined; or the initial time parameter is preconfigured.

In an optional embodiment, the measurement window includes at least one of a synchronization signal block measurement timing configuration (SSB-MTC) or a measurement gap.

In an optional embodiment, the time parameter includes at least one of an offset, a period or a duration.

In an optional embodiment, the time parameter further includes a timing advance when the measurement window includes the measurement gap.

In an optional embodiment, the configuration information further includes a cell list and/or a satellite list.

The cell list is configured to indicate a cell to which the dynamic adjustment rule configured in the configuration information is applicable, and the dynamic adjustment rule is adapted to adjust a time parameter of a measurement window of the cell in the cell list. The satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

In an optional embodiment, the configuration information further includes sharing mode indication information. The sharing mode indication information is configured to indicate a window determining manner when measurement windows calculated from at least two sets of configuration information overlap.

In an optional embodiment, the processing module 1020 is further configured to randomly determine a measurement window from the measurement windows calculated from the at least two sets of configuration information to perform a measurement when the sharing mode indication information indicates a random determining manner.

In an optional embodiment, the processing module 1020 is further configured to perform a measurement using a measurement window with a highest priority from the measurement windows calculated from the at least two sets of configuration information when the sharing mode indication information indicates a priority determining manner. The measurement window with the highest priority includes a measurement window calculated according to configuration information with a highest priority.

In an optional embodiment, the processing module 1020 is further configured to perform a measurement using an extended measurement window based on the measurement windows calculated from the at least two sets of configuration information when the sharing mode indication information indicates an extended measurement manner. The extended measurement window includes ranges of the measurement windows calculated from the at least two sets of configuration information.

In an optional embodiment, frequency points and/or subcarrier intervals of reference signals measured by using the measurement windows calculated from the at least two sets of configuration information are the same.

FIG. 11 is a structural block diagram of a cell measurement apparatus according to another illustrative embodiment of the present disclosure. As shown in FIG. 11, the apparatus includes: a sending module 1110.

The sending module 1110 is configured to send configuration information to a terminal according to location information of the terminal and ephemeris information of a satellite. The configuration information is configured to indicate a dynamic adjustment rule of a time parameter when the terminal performs a cell measurement.

In an optional embodiment, the configuration information includes at least one of a time parameter change rate or a time parameter configuration function.

In an optional embodiment, the time parameter configuration function includes, but is not limited to, at least one of a first-order function or a second-order function.

In an optional embodiment, the configuration information further includes an initial time parameter.

In an optional embodiment, the measurement window includes at least one of a synchronization signal block measurement timing configuration (SSB-MTC) or a measurement gap.

In an optional embodiment, the time parameter includes at least one of an offset, a period or a duration.

In an optional embodiment, the time parameter further includes a timing advance when the measurement window includes the measurement gap.

In an optional embodiment, the configuration information further includes a cell list and/or a satellite list.

The cell list is configured to indicate a cell to which the dynamic adjustment rule configured in the configuration information is applicable, and the dynamic adjustment rule is adapted to adjust a time parameter of a measurement window of the cell in the cell list. The satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

In an optional embodiment, the configuration information further includes sharing mode indication information. The sharing mode indication information is configured to indicate a window determining manner when measurement windows calculated from at least two sets of configuration information overlap.

In an optional embodiment, the sending module 1110/a receiving module 1120 is configured to perform a data transmission with the terminal on an unselected measurement window from the measurement windows calculated from the at least two sets of configuration information based on the window determining manner.

In an optional embodiment, the location information of the terminal includes precise location information of the terminal or rough location information of the terminal.

In an optional embodiment, the ephemeris information of the satellite includes ephemeris information of a serving satellite and ephemeris information of a neighboring satellite to be measured.

In summary, the apparatus according to embodiments of the present disclosure configures the dynamic adjustment rule of the time parameter of the measurement window through the configuration information. The UE may obtain time parameter information, such as values of the offset/the duration etc., of the subsequent SMTC/measurement gap according to the configuration information, effectively reducing an update frequency of the SMTC/the measurement gap. A processing solution is stipulated when the SMTC/the measurement gap sends the overlapping measurement windows. According to the selected solution, the UE may efficiently determine a cell that needs to be measured; or preferentially measure a cell that needs to be measured more.

FIG. 12 shows a schematic block diagram of a communication device (a network device or a terminal) according to an illustrative embodiment of the present disclosure. The communication device includes: a processor 101, a receiver 102, a transmitter 103, a memory 104 and a bus 105.

The processor 101 includes one or more processing cores. The processor 101 executes various functional applications and information processing by running software programs and modules.

The receiver 102 and the transmitter 103 may be implemented as a communication component, and the communication component may be a communication chip.

The memory 104 is connected to the processor 101 via the bus 105.

The memory 104 may be used to store at least one instruction, and the processor 101 is used to execute the at least one instruction to implement each step in the above method embodiments.

Moreover, the memory 104 may be implemented using any type of volatile or nonvolatile storage devices, or a combination thereof, including, but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM).

In an illustrative embodiment, a computer-readable storage medium is also provided, in which at least one instruction, at least one program, a code set or an instruction set is stored, and the at least one instruction, the at least one program, the code set or the instruction set is loaded and executed by the processor to implement the cell measurement method performed by the terminal device or the network device according to each of the above method embodiments.

Those ordinarily skilled in the art shall understand that all or some of the steps to implement the above embodiments may be completed by hardware, or may be completed by a program instructing the related hardware. The program may be stored in a computer-readable storage medium. The storage medium mentioned above may be read-only memories, magnetic disks or optical disks, etc.

The above are only optional embodiments of the present disclosure and are not intended to limit the present disclosure. Any modifications, equivalent substitutions, improvements, etc. made within the spirit and principle of the present disclosure shall be included in the protection of the present disclosure.

## Claims

1. A cell measurement method, performed by a terminal, comprising:
receiving configuration information, wherein the configuration information is configured to indicate a dynamic adjustment rule of a time parameter when the terminal performs a cell measurement; and
determining a measurement window based on the dynamic adjustment rule.

2. The method according to claim 1, wherein determining the measurement window based on the dynamic adjustment rule comprises:
determining the measurement window based on the dynamic adjustment rule and an initial time parameter.

3. The method according to claim 2, wherein the configuration information comprises a time parameter change rate; and
determining the measurement window based on the dynamic adjustment rule and the initial time parameter comprises:
determining the measurement window based on the initial time parameter and the time parameter change rate.

4. The method according to claim 1, wherein the configuration information comprises a time parameter configuration function; and
determining the measurement window based on the dynamic adjustment rule comprises:
determining the measurement window based on the time parameter configuration function.

5. The method according to claim 4, wherein the time parameter configuration function comprises at least one of a first-order function or a second-order function.

6. The method according to claim 2, wherein
the initial time parameter is configured in the configuration information; or
the initial time parameter is predefined; or
the initial time parameter is preconfigured.

7. The method according to any one of claims 1 to 6, wherein the measurement window comprises at least one of a synchronization signal block measurement timing configuration (SSB-MTC) or a measurement gap.

8. The method according to any one of claims 1 to 6, wherein the time parameter comprises at least one of an offset, a period or a duration.

9. The method according to claim 8, wherein the time parameter further comprises a timing advance when the measurement window comprises the measurement gap.

10. The method according to any one of claims 1 to 6, wherein the configuration information further comprises a cell list and/or a satellite list;
wherein the cell list is configured to indicate a cell to which the dynamic adjustment rule configured in the configuration information is applicable, and the dynamic adjustment rule is adapted to adjust a time parameter of a measurement window of the cell in the cell list; the satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

11. The method according to any one of claims 1 to 6, wherein the configuration information further comprises sharing mode indication information; and
wherein the sharing mode indication information is configured to indicate a window determining manner when measurement windows calculated from at least two sets of configuration information overlap.

12. The method according to claim 11, further comprising:
randomly determining a measurement window from the measurement windows calculated from the at least two sets of configuration information to perform a measurement when the sharing mode indication information indicates a random determining manner.

13. The method according to claim 11, further comprising:
performing a measurement using a measurement window with a highest priority from the measurement windows calculated from the at least two sets of configuration information when the sharing mode indication information indicates a priority determining manner,
wherein the measurement window with the highest priority comprises a measurement window calculated according to configuration information with a highest priority.

14. The method according to claim 11, further comprising:
performing a measurement using an extended measurement window based on the measurement windows calculated from the at least two sets of configuration information when the sharing mode indication information indicates an extended measurement manner, wherein the extended measurement window comprises ranges of the measurement windows calculated from the at least two sets of configuration information.

15. The method according to claim 14, wherein
frequency points and/or subcarrier intervals of reference signals measured by using the measurement windows calculated from the at least two sets of configuration information are the same.

16. A cell measurement method, performed by a network device, comprising:
sending configuration information to a terminal according to location information of the terminal and ephemeris information of a satellite, wherein the configuration information is configured to indicate a dynamic adjustment rule of a time parameter when the terminal performs a cell measurement.

17. The method according to claim 16, wherein the configuration information comprises at least one of a time parameter change rate or a time parameter configuration function.

18. The method according to claim 17, wherein the time parameter configuration function comprises at least one of a first-order function or a second-order function.

19. The method according to claim 16, wherein the configuration information further comprises an initial time parameter.

20. The method according to any one of claims 16 to 19, wherein the measurement window comprises at least one of a synchronization signal block measurement timing configuration (SSB-MTC) or a measurement gap.

21. The method according to any one of claims 16 to 19, wherein the time parameter comprises at least one of an offset, a period or a duration.

22. The method according to claim 21, wherein the time parameter further comprises a timing advance when the measurement window comprises the measurement gap.

23. The method according to any one of claims 16 to 19, wherein the configuration information further comprises a cell list and/or a satellite list;
wherein the cell list is configured to indicate a cell to which the dynamic adjustment rule configured in the configuration information is applicable, and the dynamic adjustment rule is adapted to adjust a time parameter of a measurement window of the cell in the cell list; the satellite list is configured to indicate a satellite to which the dynamic adjustment rule configured in the configuration information is applicable, and the dynamic adjustment rule is adapted to adjust a time parameter of a measurement window of the satellite in the satellite list, or the dynamic adjustment rule is adapted to adjust a time parameter of a measurement window of a cell corresponding to the satellite in the satellite list.

24. The method according to any one of claims 16 to 19, wherein the configuration information further comprises sharing mode indication information;
wherein the sharing mode indication information is configured to indicate a window determining manner when measurement windows calculated from at least two sets of configuration information overlap.

25. The method according to claim 24, further comprising:
performing a data transmission with the terminal on an unselected measurement window from the measurement windows calculated from the at least two sets of configuration information based on the window determining manner.

26. The method according to any one of claims 16 to 19, wherein the location information of the terminal comprises precise location information of the terminal or rough location information of the terminal.

27. The method according to any one of claims 16 to 19, wherein the ephemeris information of the satellite comprises ephemeris information of a serving satellite and ephemeris information of a neighboring satellite to be measured.

28. A cell measurement apparatus, comprising:
a receiving module configured to receive configuration information, wherein the configuration information is configured to indicate a dynamic adjustment rule of a time parameter when a terminal performs a cell measurement; and
a processing module configured to determine a measurement window based on the dynamic adjustment rule.

29. A cell measurement apparatus, comprising:
a sending module configured to send configuration information to a terminal according to location information of the terminal and ephemeris information of a satellite, wherein the configuration information is configured to indicate a dynamic adjustment rule of a time parameter when the terminal performs a cell measurement.

30. A terminal, comprising:
a processor;
a transceiver connected to the processor; and
a memory having stored therein executable instructions of the processor;
wherein the processor is configured to load and execute the executable instructions to implement the cell measurement method according to any one of claims 1 to 15.

31. A network device, comprising:
a processor;
a transceiver connected to the processor; and
a memory having stored therein executable instructions of the processor;
wherein the processor is configured to load and execute the executable instructions to implement the cell measurement method according to any one of claims 16 to 27.

32. A computer-readable storage medium having stored therein executable instructions that, when loaded and executed by a processor, cause the cell measurement method according to any one of claims 1 to 27 to be implemented.
